# EUROPÄISCHE PATENTSCHRIFT

(11) **EP 2 917 761 B1**
(45) Veröffentlichungstag und Bekanntmachung des Hinweises auf die Patenterteilung: **31.07.2019**
(21) Anmeldenummer: 13770868.1
(22) Anmeldetag: 24.09.2013
(51) Int. Cl.: G01S 15/87, G01S 15/93, G01S 7/52

(54) **VERFAHREN ZUR DETEKTION DER SENSORDEGRADATION BEI ABSTANDSSENSOREN**
METHODS FOR DETECTING SENSOR DEGRADATION IN DISTANCE SENSORS
PROCÉDÉS DE DÉTECTION DE LA DÉGRADATION DE CAPTEURS DE DISTANCE

(30) Priorität: 08.11.2012 DE 102012220311
(43) Veröffentlichungstag der Anmeldung: 16.09.2015
(73) Patentinhaber: Robert Bosch GmbH, 70442 Stuttgart (DE)
(72) Erfinder: ROKA, Andras, H-1124 Budapest (HU); SCHUMANN, Michael, 70597 Stuttgart (DE)
(86) Internationale Anmeldenummer: PCT/EP2013/069808
(87) Internationale Veröffentlichungsnummer: WO 2014/072118

(56) Entgegenhaltungen:
- DE-A1-102007 059 908
- DE-A1-102009 040 992

## Beschreibung

### Stand der Technik

Die Erfindung betrifft ein Verfahren zur Detektion einer Sensordegradation bei Abstandssensoren. Die Erfindung betrifft zudem eine Abstandssensoreinheit, ein Fahrassistenzsystem und ein Computerprogramm zur Durchführung des Verfahrens.

Fahrassistenzsysteme sind Zusatzeinrichtungen in einem Fahrzeug, die den Fahrer beim Führen des Fahrzeugs unterstützen. Derartige Fahrassistenzsysteme umfassen typischerweise unterschiedliche Subsysteme, wie Fahrinformationssysteme oder prädikative Sicherheitssysteme. Für verschiedene dieser Subsysteme ist eine Umfeldsensorik erforderlich, die das Umfeld des Fahrzeuges überwacht, um beispielsweise Objekte zu detektieren, die potentielle Hindernisse auf der Fahrbahn darstellen.

Typische Verfahren zur Umfelderkennung in einem Fahrzeug nutzen Abstandssensoren, insbesondere Ultraschallsensoren, die basierend auf einem Sendepuls-Echo-Verfahren den Abstand zu Objekten im Umfeld des Fahrzeuges messen und deren Messdaten als Grundlage für eine vom Fahrassistenzsystem zu generierende Reaktion dienen. Die Qualität der bereitgestellten Messdaten spielt daher eine entscheidende Rolle für die Bereitstellung einer Fahrassistenzfunktion. So können Sensordegradationen oder Umwelteinflüsse, wie Schnee oder Eis, Störungen hervorrufen, die zur völligen Funktionsunfähigkeit der Ultraschallsensoren führen. Die Ultraschallsensoren sind dann quasi blind. Um möglichst zuverlässige Aussagen über die Funktionsfähigkeit der Ultraschallsensoren treffen zu können, sind unterschiedliche Verfahren bekannt.

Im einfachsten Fall wird die Funktionsfähigkeit des Ultraschallsensors daran gemessen, dass der Sensor überhaupt ein Signal detektiert. Aus DE 10 103 936 A1 ist ein Ultraschallsonarsystem zum Detektieren eines Hindernisses bekannt, wobei ein Ultraschalloszillator eine Nachschwing- oder Abklingschwingungsfrequenz erzeugt. Durch das Umschalten von einer ersten Sendefrequenz auf eine zweite Sendefrequenz, die von der Nachschwingungsfrequenz verschieden ist, kann auf ein Echo und damit ein Hindernis innerhalb eines vorbestimmten Abstandes geschlossen werden. Derartige Verfahren können jedoch keine zuverlässige Aussage darüber treffen, ob der Sensor gestört oder funktionsunfähig ist.

Eine zweite Gruppe von Verfahren misst eine Transferfunktion bei verschiedenen Anregungsfrequenzen und kann daraus Informationen zur Frequenzcharakteristik und der Signalqualität extrahieren. DE 10 2010 003 624 A1 beschreibt ein Verfahren zum Erfassen von Störungen eines Ultraschallwandlers. Dabei wird der Ultraschallwandler mit zwei unterschiedlichen Frequenzen angeregt und die sich ergebenden unterschiedlichen Ausschwingzeitdauern verglichen. Die frequenzabhängige Messung nimmt allerdings viel Zeit in Anspruch, und während dieser Zeit kann der Sensor nicht anderweitig genutzt werden. Zusätzlich ist weitere Elektronik notwendig, die den Aufbau des Sensors komplexer und teurer gestaltet.

Die dritte Gruppe von Verfahren nutzt das Ausschwingverhalten des Sensors, um dessen Funktionalität zu Überwachen. Aus EP 0 816 865 A2 ist ein Verfahren zum Selbsttesten einer Einrichtung für Ultraschall-Laufzeitmessungen bekannt, bei dem das Ausschwingverhalten des Ultraschallsensors nach einem Sendevorgang ausgewertet wird. Im "Diagnose"-Modus wird das Ausschwingverhalten hinsichtlich zumindest eines Signalformparameters ausgewertet und auf Einhaltung eines Fehlerkriteriums überprüft. Hierbei kann das Ausschwingverhalten zwar mit jedem Senden-Empfangen-Zyklus gemessen werden. Jedoch ist es schwierig, auf Basis des Ausschwingverhaltens zuverlässige Aussagen über die Funktionsfähigkeit des Sensors zu treffen.

Nachteilig an bekannten Verfahren ist weiterhin, dass ein Totalausfall von Ultraschallsensoren nur schwer erkennbar ist. Insbesondere bei der Verwendung in Fahrassistenzassistenzsystemen bedeutet ein derartiger Totalausfall, dass das System zumindest teilweise "blind" ist. Daher besteht ein anhaltendes Interesse daran, etwaige Störungen und insbesondere solche, die zur völligen Funktionsunfähigkeit führen, zuverlässig zu erkennen.

### Offenbarung der Erfindung

Erfindungsgemäß wird ein Verfahren zur Detektion einer Sensordegradation bei Abstandssensoren gemäß Anspruch 1 vorgeschlagen.

Der Abstandssensor kann Teil der Umfeldsensorik eines Fahrassistenzsystems mit unterschiedlichen Subsystemen sein, beispielsweise mit einem Einparkassistenten, einem Seitenüberwachungsassistenten oder einem Spurhaltesystem. Dabei dient die Umfeldsensorik des Fahrassistenzsystems zur Überwachung des Fahrzeugumfeldes, wobei etwa Ultraschallsensoren, Radarsensoren, Infrarotsensoren, LIDAR-Sensoren, optische Sensoren oder Kombinationen hieraus als Umfeldsensorik eingesetzt werden. Zur Abstandsmessung finden insbesondere solche Sensoren Anwendung, die nach dem Prinzip eines Puls-Echo-Verfahrens den Abstand zu Objekten im Umfeld des Fahrzeuges bestimmen. Bevorzugt eignen sich dazu Ultraschallsensoren.

Der Abstandssensor kann im Rahmen der Erfindung sowohl einen Sendepuls aussenden als auch ein Echo empfangen. Diese Bauart ist zwar vorteilhaft aber keineswegs zwingend. Gleichermaßen sind auch baulich getrennte Sender und Empfänger möglich. Bei baulich getrennten Einheiten werden mindestens zwei Abstandssensoren eingesetzt, wobei ein Abstandssensor als "Sender" fungiert, wenn er einen Sendepuls abgibt, und ein Abstandssensor als "Empfänger" fungiert, wenn er ein Signal empfängt.

Das erfindungsgemäße Verfahren kann im Rahmen einer Laufzeitmessung durchgeführt werden, wobei die Laufzeitmessung mit Hilfe mindestens eines Abstandssensors durchgeführt wird. Dabei wird der Abstandssensor zunächst angesteuert, einen Sendepuls mit einer Sendepulslänge auszusenden. Die Ansteuerung kann in einem Fahrassistenzsystem beispielsweise zentral von einem Steuergerät (Electronic Control Unit, ECU) oder von einer dem Abstandssensor zugeordneten Elektronikeinrichtung, etwa einer anwendungsspezifischen integrierten Schaltung (Application Specific Integrated Circuit, ASIC), aus erfolgen. Dabei sind die Sensorparameter, etwa der Sendestrom, die Frequenz, die Amplitude, die Sendepulslänge oder die Modulation eines Sendepulses bzw. aufeinanderfolgender Sendepulse, variabel und können an die jeweilige Situation angepasst werden. An das Sendeintervall schließt sich ein Abklingintervall an, in dem beispielsweise eine Membran des Abstandssensors nachschwingt. Anschließend werden die ausgesendeten Sendepulse bei Reflektion an Objekten als Echosignale von einem oder mehreren Abstandssensor(en) detektiert. Aus der Laufzeit eines Sendepulses, also der Zeit zwischen Senden des Sendepulses und Empfangen des Echosignals, ergibt sich dann unter Berücksichtigung der Geschwindigkeit des Signals und gegebenenfalls des Fahrzeuges der Abstand zwischen dem Objekt und dem Abstandssensor.

In einer Implementierung des erfindungsgemäßen Verfahrens wird das Sensorsignal in jedem Abklingintervall erfasst, das sich an das Sendeintervall anschließt. Vorzugsweise folgt auf das Abklingintervall ein Empfangsintervall, in dem Echosignale empfangen werden, bevor ein nachfolgender Sendepuls ausgesandt wird. Weiterhin bevorzugt wird das Sensorsignal in einem Abklingintervall und in einem Sendeintervall erfasst.

In einer weiteren Implementierung des erfindungsgemäßen Verfahrens wird das Frequenzverhalten des Sensorsignals aus Intervallen mindestens einer viertel Wellenlänge bestimmt. Bevorzugt wird das Frequenzverhalten aus Intervallen einer halben Wellenlänge bestimmt.

Das Frequenzverhalten des erfassten Sensorsignals im Abklingintervall kann dabei mindestens drei Intervalle umfassen, wobei ein erstes und ein drittes Intervall mindestens ein Extremum enthalten und das zweite Intervall zwischen dem letzten Extremum des ersten Intervalls und dem ersten Extremum des dritten Intervalls liegt.

Bevorzugt wird der Degradationsgrad anhand des Frequenzverhaltens im zweiten Intervall bestimmt. Dabei kann ein Mittelwert aus dem Frequenzverhalten im zweiten Intervall bestimmt werden, und der Degradationsgrad aus dem Mittelwert und einem vorgegebenen Sollwert bestimmt werden. Der Sollwert kann beispielsweise der Eigenfrequenz des Abstandssensors in einem voll funktionsfähigen Zustand entsprechen.

In einer weiteren Implementierung des erfindungsgemäßen Verfahrens kann sich der Degradationsgrad aus der Einhüllenden des Frequenzverhaltens ergeben. Die Einhüllende des Frequenzverhaltens kann hierfür bestimmt werden und mit einem vorgegebenen Verlauf, insbesondere mit dem Verlauf eines voll funktionsfähigen Abstandssensor, verglichen werden. Der vorgegebene Verlauf kann dabei in der dem Abstandssensor zugeordneten Elektronikeinrichtung oder einem zentralen Steuergerät hinterlegt sein. Die Differenz zwischen dem Verlauf des Frequenzverhaltens und dem vorgegebenen Verlauf kann mittels gängiger Methoden, wie die mittlere Abweichung, bestimmt und charakterisiert werden. Aufgrund der Einfachheit des Verfahrens kann dieses als Hardware-Schaltung, beispielsweise als Schaltung mit Komparatoren und Zählern, oder als Software in der dem Abstandssensor zugeordneten Elektronikeinrichtung oder dem zentralen Steuergerät realisiert werden.

Objekte im Nahbereich können Echos generieren, die mit dem Frequenzverhalten im Abklingintervall interferieren, so dass sich damit ebenfalls Differenzen zum "normalen" Frequenzverhalten ergeben und eine Degradation vorgetäuscht wird. In einer weiteren Implementierung des erfindungsgemäßen Verfahrens wird daher der Degradationsgrad in einem zusätzlichen Schritt durch eine Variation der Sendepulslänge, bevorzugt durch eine gegenüber dem normalen Betrieb des Abstandsensors verlängerte Sendepulslänge, validiert. Durch die veränderte Sendepulslänge interferiert ein Nahbereichsecho zu einem unterschiedlichen Zeitpunkt mit dem Frequenzverhalten im Abklingintervall. Damit ergeben sich auch unterschiedliche Frequenzverläufe. Bleibt das Frequenzverhalten im Abklingintervall unabhängig von der Sendepulsdauer erhalten, so ist der Abstandssensor blind.

Ein weitere Größe, welche hierfür zu Hilfe gezogen werden kann, ist die Abklingzeit selbst. Insbesondere bei längeren Sendpulsdauern (und damit auch Echodauern) würde die Abklingzeit deutlich ansteigen. Bleibt die Abklingzeit dagegen unabhängig von der Sendepulslänge gleich, dann kann davon ausgegangen werden, dass sich keine Objekte im Nahbereich befinden. In einer weiteren Implementierung des erfindungsgemäßen Verfahrens werden daher zusätzlich Echosignale im Abklingintervall basierend auf einer Abklingzeit erkannt. Dazu kann die Sendepulslänge länger gewählt werden als die Abklingzeit oder eine Veränderung des Echosignals zugrunde gelegt werden. Bleibt die Abklingzeit in beiden Varianten gleich, so ist der Abstandssensor blind.

Erfindungsgemäß wird weiterhin ein Computerprogramm zur Durchführung eines der hierin beschriebenen Verfahren vorgeschlagen, wenn das Computerprogramm auf einer programmierbaren Einrichtung ausgeführt wird. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung, oder auf einer entfernbaren CD-ROM, DVD oder USB-Stick. Zusätzlich oder alternativ kann das Computerprogramm auf einer Computereinrichtung wie einem Server zum Herunterladen bereitgestellt werden, z.B. über ein Datennetzwerk, wie das Internet oder einer Cloud, oder eine Kommunikationsverbindung, wie etwa eine Drahtlosverbindung.

Erfindungsgemäß wird weiterhin eine Abstandssensoreinheit mit einer Empfangseinheit vorgeschlagen, die zur Durchführung des vorstehend beschriebenen Verfahrens ausgebildet ist. Weiterer Gegenstand der Erfindung ist ein Fahrassistenzsystem zur Durchführung des zur Durchführung des vorstehend beschriebenen Verfahrens mit folgenden Komponenten:
i) mindestens einem Abstandssensor zum Aussenden mindestens eines Sendepulses:
ii) mindestens eine Komponenten, insbesondere eine Empfangseinheit, zum Erfassen eines Sensorsignals in mindestens einem Abklingintervall; und
iii) mindestens eine Komponente zum Bestimmen eines Degradationsgrades basierend auf einem Frequenzverhalten des erfassten Sensorsignals.

Zusätzlich kann die erfindungsgemäße Abstandssensoreinheit und das erfindungsgemäße Fahrassistenzsystem eine Komponente umfassen, die den Degradationsgrad durch eine Variation der Sendepulslänge, bevorzugt durch eine gegenüber dem normalen Betrieb des Abstandsensors verlängerte Sendepulslänge, validiert.

Hierbei stellen die einzelnen Komponenten funktionale Komponenten oder Routinen dar, die beispielsweise im Rahmen eines Computerprogramms auf einer elektronischen Einrichtung, wie einer programmierbaren Computereinrichtung, ausgeführt werden. Bei der Computereinrichtung kann es sich beispielsweise um ein Steuergerät (ECU) zur Implementierung eines Fahrassistenzsystems beziehungsweise eines Subsystems hiervon oder den Abstandssensoren zugeordnete Elektronikeinrichtungen (ASIC) handeln. So kann insbesondere die Empfangseinheit als zentrales Steuergerät oder den Abstandssensoren zugeordnete Empfangseinheit ausgestaltet sein.

Die elektronische Einrichtung kann als zentrale oder sensorindividuelle Einrichtung mit dem Abstandssensor über Steuersignale kommunizieren. So können Steuersignale generiert werden, die den Abstandssensor triggern, Sendepulse mit einem definierten Sendespektrum auszusenden. Umgekehrt kann der Abstandssensor empfangene Signale an die elektronische Einrichtung zur Signalverarbeitung weiterleiten. So erfolgt im Rahmen der Signalverarbeitung die Bestimmung des Degradationsgrades.

### Vorteile der Erfindung

Die Erfindung ermöglicht es, zuverlässig die Funktionsfähigkeit eines Abstandssensors zu überwachen. So kann insbesondere auf Basis des Frequenzverhaltens im Abklingintervall eine zuverlässige Aussage zum Degradationsgrad des Abstandssensors gemacht werden. Daraus ergibt sich, ob der Abstandssensor voll funktionsfähig, teilweise blind oder vollständig blind ist. Eine derartige Überwachung ist insbesondere für Abstandssensoren in einem Fahrassistenzsystem vorteilhaft, da auf diese Weise Fehleinschätzungen und Fehlreaktionen aufgrund von blinden Abstandssensoren vermieden werden.

Die Bestimmung des Degradationsgrades erfolgt dabei durch eine einfache Messung, die in jedem Sende-Empfangs-Zyklus durchgeführt werden kann, ohne die Funktionalität des Abstandssensors zu beeinflussen. Weiterhin stellt der Signalverlauf im Abklingintervall ein sehr stabiles Signal bereit, das wiederum die Zuverlässigkeit des erfindungsgemäßen Verfahrens erhöht. Zusätzlich können einfache Überprüfungsmechanismen in das erfindungsgemäße Verfahren integriert werden, die etwaige Fehlklassifizierungen eines Abstandssensors vermeiden.

Auch an die elektronischen Komponenten zur Realisierung einer Einheit zum Bestimmen des Degradationsgrades müssen keine besonderen Anforderungen gestellt werden, und es können bereits existente Empfangseinheiten eingesetzt werden. Insbesondere kann das Verfahren sehr kostengünstig im Abstandssensor umgesetzt werden, da für die Ermittlung von Periodendauern nur Komparatoren und Zähler verwendet werden müssen. Ein weiterer Vorteil besteht darin, dass für die Degradation kein Sonderbetrieb erforderlich ist, d.h. die Information wird im normalen Messbetrieb zu jedem Sende-Empfangszyklus gewonnen. Dadurch entstehen keinerlei zusätzliche Latenzen.

### Kurze Beschreibung der Zeichnungen

Weitere Aspekte und Vorteile der Erfindung werden nunmehr anhand der beigefügten Zeichnungen eingehender beschrieben. Hierbei zeigen:
- Figur 1: ein mit einem erfindungsgemäßen Ultraschallsensor ausgerüstetes Fahrzeug in einer beispielhaften Fahrsituation;
- Figur 2: schematisch einen Signalverlauf des Sensorsignals für einen Messzyklus im Sende- und Abklingintervall;
- Figur 3: schematisch ein Frequenzverhalten des Sensorsignals aus Figur 2 für einen Messzyklus im Sende- und Abklingintervall;
- Figur 4: schematisch einen weiteren Signalverlauf des Sensorsignals für einen Messzyklus im Sende- und Abklingintervall;
- Figur 5: schematisch ein weiteres Frequenzverhalten des Sensorsignals aus Figur 4 für einen Messzyklus im Sende- und Abklingintervall;
- Figur 6: schematisch einen weiteren Signalverlauf des Sensorsignals für einen Messzyklus im Sende- und Abklingintervall;
- Figur 7: schematisch ein weiteres Frequenzverhalten des Sensorsignals aus Figur 6 für einen Messzyklus im Sende- und Abklingintervall;
- Figur 8: in Form eines Flussdiagramms eine Arbeitsweise des erfindungsgemäßen Ultraschallsensors aus Figur 1.

### Ausführungsformen der Erfindung

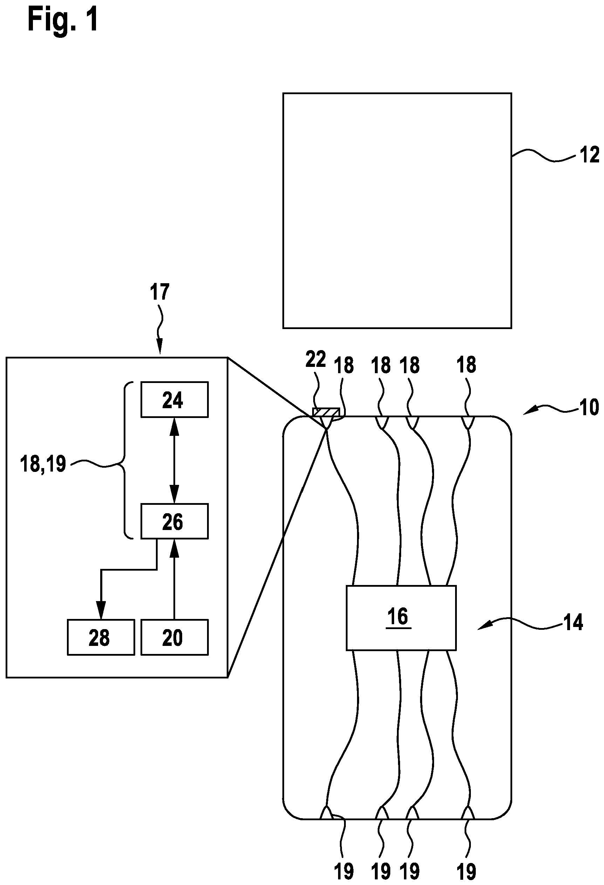

In Figur 1 ist schematisch eine Fahrsituation mit einem Fahrzeug 10 gezeigt, das sich beispielsweise in eine Garageneinfahrt oder eine begrenzte Parklücke 12 bewegt.

Das Fahrzeug 10 ist mit einem Fahrassistenzsystem 14 ausgerüstet, das ein ultraschallbasiertes Sensorsystem zur Umfeldüberwachung mit Ultraschallsensoren 18, 19 vorne und hinten am Fahrzeug 10 umfasst. Gesteuert wird das ultraschallbasierte Sensorsystem 18 von einzelnen den Ultraschallsensoren 18, 19 zugeordneten Einrichtungen 20 und einer übergeordneten Einheit 16, die typischerweise ein zentrales Steuergerät des Fahrassistenzsystems 12 darstellt. Neben den in Figur 1 beispielhaft gezeigten Ultraschallsensoren 18, 19 können auch andere Abstandssensoren, wie LIDAR-, Infrarot- oder Radarsensoren, zur Laufzeitmessung eingesetzt werden.

In dem vergrößerten Ausschnitt der Figur 1 ist der Aufbau einer Ultraschalleinheit 17 mit einem Pulsgenerator 20 und einer Empfangseinheit 28 dargestellt. Hierbei wird typischerweise ein Piezoaktor 26, der mit der Membran 24 des Ultraschallsensors 18, 19 verbunden ist, von dem Pulsgenerator 20 angesteuert, um Pulse zu senden. Zusätzlich ist der Piezoaktor 26 mit einer Empfangseinheit 28 verbunden, um beispielsweise ein Echosignal zu empfangen oder ein Abklingverhalten der Membran 24 zu detektieren. Die Signalverarbeitung findet dabei in den sensorindividuellen Einheiten 28 oder der zentralen Elektronikeinheit 16 statt, wobei Teilschritte der Signalverarbeitung in einer der Einheiten 16, 28 oder auf die Einheiten 16, 28 verteilt stattfinden.

Bei der Anfahrt des Fahrzeuges 10 auf die begrenzte Parklücke oder die Garageneinfahrt 12 senden die vorderen Ultraschallsensoren 18, Ultraschallpulse aus, um den Abstand zwischen dem Fahrzeug 10 und der Begrenzungen 12 aus der Laufzeit der Ultraschallpulse zu bestimmen. Dabei kann, wie in Figur 1 schematisch dargestellt, eine Situation auftreten, in der beispielsweise ein Ultraschallsensor 18 und insbesondere die Membran 24 des Ultraschallsensors mit Schnee oder Schlamm 22 bedeckt ist, und aufgrund dessen in seiner Funktionsfähigkeit eingeschränkt oder sogar völlig funktionsunfähig ist. Der Ultraschallsensor 18 und das Fahrassistenzsystem 14 sind hierbei im schlimmsten Fall blind für Hindernisse 12, was zu gefährlichen Fahrsituationen führen kann.

In derartige Situationen ist daher unumgänglich, eine zuverlässige Aussage über die Funktionsfähigkeit des Ultraschallsensors 18 zu generieren, damit das Fahrassistenzsystem 14 entsprechend reagieren kann.

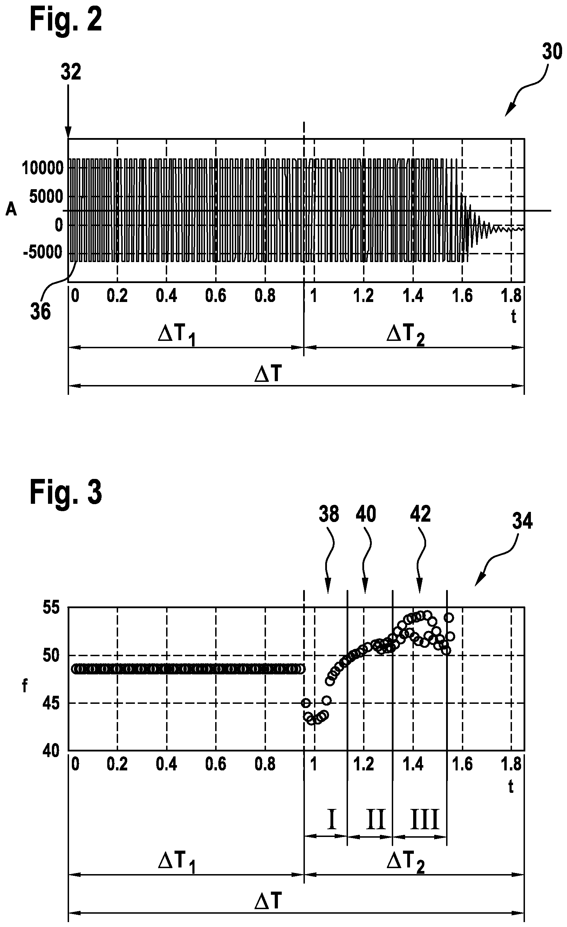

In Figur 2 ist schematisch einen beispielhaften Verlauf des Sensorsignals 30, wobei die von einem Ultraschallsensor 18, 19 gemessenen Signalamplitude A gegen die Zeit t für einen Messzyklus ΔT aufgetragen ist.

Der Messzyklus ΔT beginnt mit dem Sendepuls 32 für eine Sendepulslänge ΔT₁ und endet nach dem Abklingintervall ΔT₂. Durch den Sendepuls 32 wird mindestens ein Ultraschallsensor 18, 19 zum Senden eines Ultraschallpulses für einen bestimmten Zeitraum ΔT₁ angeregt. Während der Abklingdauer ΔT₂ schwingt die Membran 24 des Ultraschallsensors 18, 19 für etwa 0,7 bis 0,9 ms nach und der Empfang von Echosignalen ist nur eingeschränkt möglich. Nach der Abklingdauer ΔT₂ ist der Ultraschallsensor für ein Empfangsintervall (nicht dargestellt) empfangsbereit, wobei das Empfangsintervall von der gewünschten Reichweite, beispielsweise 5 m, abhängt. In diesem Zeitfenster kann der Ultraschallsensor 18, 19 Echosignale, die von Objekten 12 reflektiert wurden, empfangen.

An dieser Stelle sei angemerkt, dass etwaige Sättigungen in den hier gezeigten Signalverläufen 30 von der für die Durchführung der Versuche verwendeten Verstärkerstufe stammen. Verstärkerstufen sind dem Fachmann jedoch hinlänglich bekannt, so dass die Verstärkerstufe je nach Anwendung ohne weiteres angepasst werden kann.

In Figur 3 ist schematisch ein Frequenzverhalten 34 des Sensorsignals aus Figur 2 für einen Messzyklus ΔT gezeigt.

Das Frequenzverhalten 34 des Sensorsignals aus Figur 2 ergibt sich aus der halben Wellenlänge 36 des Sensorsignals. Dazu wird für jedes Intervall 36 einer halben Wellenlänge die Frequenz bestimmt und gegen einen mittleren Zeitpunkt t aufgetragen. Während der Sendepulslänge ΔT₁ ist das Frequenzverhalten 34 durch die elektronische Steuerung des Ultraschallsensors 18, 19 bestimmt. Beispielsweise kann ein Sendepuls 38 mit einer Pulslänge ΔT₁ von etwa 1 ms und einer Frequenz von etwa 48 kHz ausgesendet werden.

Der Messzyklus ΔT₁ endet nach dem Abklingintervall ΔT₂, das aus einem Nachschwingen oder Ausschwingen der Membran 24 des Ultraschallsensors 18, 19 resultiert. Im Abklingintervall ΔT₂ sind in dem hier gezeigten Beispiel drei Teilintervalle I, II, III enthalten. Zunächst zeigt sich im Teilintervall I ein Minimum 38, auf das eine ansteigende Passage 40 im Teilintervall II folgt. Im Teilintervall III bilden sich erneut Minima und Maxima 42 aus.

Das Frequenzverhalten 34 in Teilintervall II charakterisiert dabei die Eigenfrequenz des Ultraschallsensors 18, 19. Zur Bestimmung der Eigenfrequenz werden die Frequenzen in diesem Teilintervall II gemittelt. Das Frequenzverhalten 34 in den Teilintervallen I und II charakterisiert dagegen mechanische und elektronische Eigenschaften des Ultraschallsensors 18, 19.

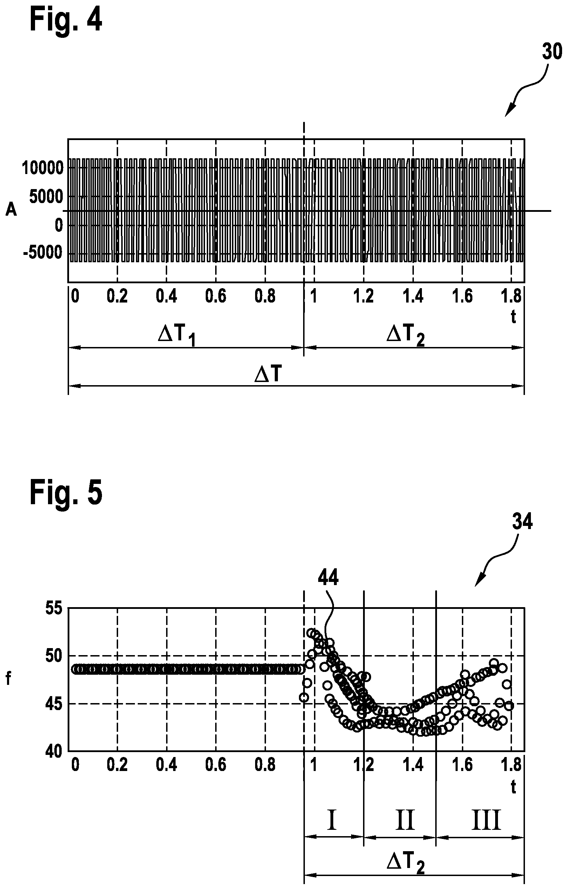

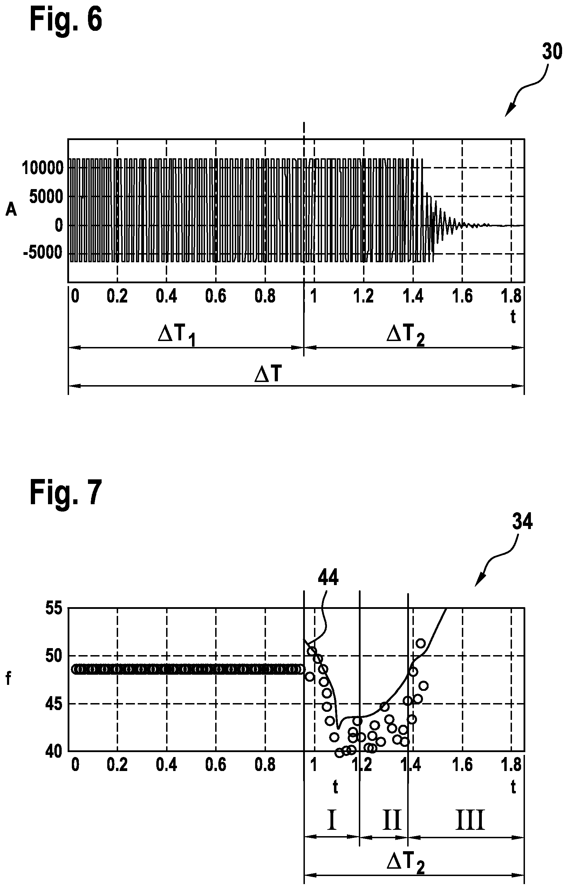

In den Figuren 4 und 6 sind schematisch weitere Signalverläufe 30 des Sensorsignals für einen Messzyklus ΔT₁ zur Abstandsmessung gezeigt.

Im Vergleich zu dem in Figur 2 gezeigten Signalverlauf 30 stammen die Signalverläufe 30 der Figuren 4 und 6 von einem Ultraschallsensor 18, 19, dessen Membran 24 bei der Messung mit unterschiedlichen Mengen an Schlamm und Eis 22 bedeckt war. Im Beispiel der Figur 4 wurden 50 mg Schlamm 22 auf die Membran 24 aufgetragen. Im Beispiel der Figur 6 wurden 100 mg Schlamm 22 auf die Membran 24 aufgetragen.

Aus den Signalverläufen der Figuren 4 und 6 ergibt sich die Abklingzeit T₂ aus der Länge des Abklingintervalls ΔT₂. Hierbei ist die Abklingzeit T₂ des Signalverlaufes 30 aus Figur 4 größer als die Abklingzeit T₂ der Signalverläufe 30 aus den Figuren 2 und 6. Weiterhin ist die Abklingzeit T₂ des Signalverlaufes 30 der Figur 6 kleiner als die Abklingzeit T₂ des in Figur 2 dargestellten Signalverlaufes 30. Daraus ist ersichtlich, dass die Abklingzeit T₂ nicht mit Degradationsgrad des Ultraschallsensors 18, 19 korreliert. Die Abklingzeit T₂ gibt somit keinerlei Hinweis dazu, ob der Ultraschallsensor 18, 19 teilweise oder vollständig blind ist. Hier kann das erfindungsgemäße Verfahren Abhilfe schaffen.

Die Figuren 5 und 7 zeigen schematisch das entsprechende Frequenzverhalten 34, das wie vorstehend beschrieben aus den Signalverläufen 30 der Figuren 4 und 6 resultiert.

Ein Vergleich des Frequenzverhaltens 34 der in den Figuren 3, 5 und 7 dargestellten Beispiele zeigt, dass sich das Frequenzverhalten 34 im Abklingintervall ΔT₂ je nach Degradationsgrad verändert. Insbesondere im Teilintervall II, das für die Eigenfrequenz des Ultraschallsensors 18, 19 maßgeblich ist, ist der Degradationsgrad deutlich zu erkennen. So ergibt eine Bestimmung der Eigenfrequenz durch Mittelung der Frequenzen im Teilintervall II im Beispiel der Figur 3 mit einem voll funktionsfähigen Ultraschallsensor 18, 19 eine höhere Eigenfrequenz als die Beispiele der Figuren 5 und 7. Im Beispiel der Figur 5 ist die gemittelte Frequenz im Teilintervall II kleiner als im Beispiel der Figur 3 und größer als im Beispiel der Figur 7. Der Ultraschallsensor 18, 19 ist somit teilweise blind, und der Degradationsgrad ist größer als für den voll funktionsfähigen Ultraschallsensor 18, 19 der Figur 3. Das Beispiel der Figur 7 zeigt einen noch größeren Degradationsgrad mit einem Ultraschallsensor, der quasi blind ist.

Auf diese Weise wird aus der Eigenfrequenz in Teilintervall II des Abklingintervalls ΔT₂ der Degradationsgrad bestimmt. Um einen konkreten Wert für den Degradationsgrad des Ultraschallsensors 18, 19 anzugeben, wird die bestimmte Eigenfrequenz mit einem gespeicherten Sollwert, der vorzugweise der Eigenfrequenz der voll funktionsfähigen Ultraschallsensors 18, 19 entspricht, verglichen und die Differenz gebildet. Ist die Differenz < 1-2 kHz, so ist der Sensor voll funktionsfähig. Ist die Differenz größer, so ist der Sensor teilweise blind, liegt die Differenz größer als 5-8 kHz, so ist der Sensor nicht mehr funktionsfähig.

Neben der Eigenfrequenz als Maß für den Degradationsgrad kann, wie aus den Figuren 3, 5 und 7 ersichtlich, auch die Einhüllende 44 des Frequenzverhaltens 34 Aufschluss über den Degradationsgrad geben. So verändert sich die Einhüllende 44 des Frequenzverhaltens 34 vom voll funktionsfähigen Ultraschallsensor 18, 19 zum blinden oder teilweise blinden Ultraschallsensor 18, 19. Insbesondere das Extremum 34 in Teilintervall I zeigt eine Änderung vom Minimum für den voll funktionsfähigen Ultraschallsensor 18, 19 zum Maximum für den blinden oder teilweise blinden Ultraschallsensor 18, 19.

Auch die Einhüllende 44 des Frequenzverhaltens 34 in den Teilintervallen II, III ändert sich insbesondere in Bezug auf die Frequenzhöhe. Zusätzlich zu den Änderungen der Einhüllenden 44 des Frequenzverhaltens 34 im Abklingintervall ΔT₂ können auch die Änderungen im Sendeintervall ΔT₁ für die Bestimmung des Degradationsgrades herangezogen werden. Die Einhüllende des Frequenzverhaltens kann hierfür bestimmt und mit einem im Speicher der Empfangseinrichtung 28 des Sensors hinterlegten "normalen" Verlauf, das heißt dem eines voll funktionsfähigen Abstandssensors, verglichen werden. Die Differenz kann über die gängige Methoden, etwa durch Bestimmung der mittleren Abweichung, bestimmt und charakterisiert werden. Aufgrund der Einfachheit des Verfahrens kann dieser auch als Hardware-Schaltung in der dem Abstandssensor zugeordneten Empfangseinrichtung oder in Software realisiert werden.

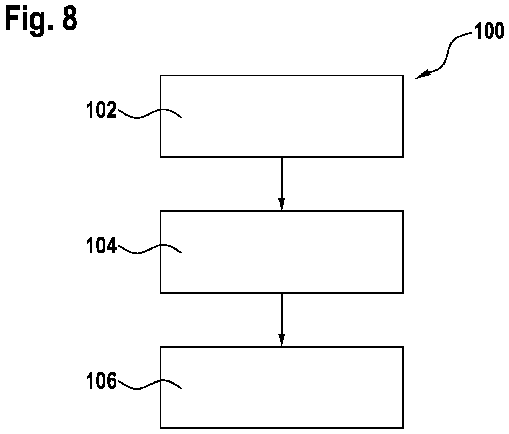

In Figur 8 ist in Form eines Flussdiagramms 100 eine Arbeitsweise des Fahrassistenzsystems aus Figur 1.

In einem ersten Schritt 102 wird mindestens ein Ultraschallpulses mit einer bestimmten Pulslänge ausgesandt. In einem zweiten Schritt 104 wird das Sensorsignal im Abklingintervall ΔT₂ oder im Sendeintervall ΔT₁ und Abklingintervall ΔT₂ erfasst. In einem dritten Schritt 106 wird auf Basis der Einhüllenden 44 des erfassten Sensorsignals der Degradationsgrad bestimmt. Die Bestimmung des Degradationsgrades kann dabei wie vorstehend beschrieben anhand der Eigenfrequenz oder der Einhüllenden 44 erfolgen.

Zusätzlich kann vorgesehen werden, dass Echosignale im Abklingintervall ΔT₂ basierend auf einer Abklingzeit erkannt werden, um Fehlklassifizierungen eines Ultraschallsensors 18, 19 im Rahmen der Bestimmung des Degradationgrades zu vermeiden. Dazu kann die Sendepulslänge T₁ länger gewählt werden als die Abklingzeit T₂ oder eine Veränderung des Echosignals etwa bei sich bewegenden Fahrzeugen 10 zugrunde gelegt werden. Bleibt die Abklingzeit in beiden Varianten gleich, so ist der Ultraschallsensor 18, 19 blind.

Die Erfindung ist nicht auf die hier beschriebenen Ausführungsbeispiele und die darin hervorgehobenen Aspekte beschränkt. Vielmehr ist innerhalb des durch die anhängigen Ansprüche angegeben Bereiches ist eine Vielzahl von Abwandlungen möglich, die im Rahmen fachmännischen Handels liegen.

## Patentansprüche

1. Verfahren (100) zur Detektion einer Sensordegradation bei als Ultraschallsensoren ausgeführten Abstandssensoren (18, 19) mit folgenden Schritten:
a) Aussenden (102) mindestens eines Sendepulses (32) mit einem Abstandssensor (18, 19);
b) Erfassen (104) eines Sensorsignals (30) des Abstandssensors (18, 10) in zumindest einem Abklingintervall (ΔT₂), in dem eine Membran des Abstandssensors (18, 19) nachschwingt, wobei ein Frequenzverhalten (34) des erfassten Sensorsignals (30) mindestens drei Intervalle (I, II, III) umfasst, wobei ein erstes und ein drittes Intervall (I, III) mindestens ein Extremum (38, 42) enthalten und ein zweites Intervall (II) zwischen einem letzten Extremum (38) des ersten Intervalls (38) und einem ersten Extremum (42) des dritten Intervalls (III) liegt.;
c) Bestimmen eines Degradationsgrades basierend auf einer Eigenfrequenz des Ultraschallsensors im zweiten Intervall (II) oder basierend auf einem Vergleich der Einhüllenden (44) des Frequenzverhaltens (34) des Sensorsignals (30) in einem der drei Intervalle (I, II, III) mit einem hinterlegten Verlauf; und
d) Variation der Sendepulslänge (T₁), wobei das Ergebnis aus Schritt c) validiert wird und eine Erblindung des Abstandssensors (18,19) festgestellt wird, wenn das Frequenzverhalten (34) unabhängig von der Sendepulslänge (T₁) ist.

2. Verfahren (100) gemäß Anspruch 1, **dadurch gekennzeichnet, dass** das Sensorsignal (30) in jedem Abklingintervall (ΔT₂) erfasst wird, das sich an ein Sendeintervall (ΔT₁) anschließt.

3. Verfahren (100) gemäß Anspruch 1 oder 2, **dadurch gekennzeichnet, dass** das Frequenzverhalten (34) des erfassten Sensorsignals (30) aus Intervallen (36) mindestens einer viertel Wellenlänge bestimmt wird.

4. Verfahren (100) gemäß Anspruch 1 bis 3, **dadurch gekennzeichnet, dass** aus dem Frequenzverhalten (34) im zweiten Intervall (II) ein Mittelwert bestimmt wird und der Degradationsgrad aus dem Mittelwert und einem vorgegebenen Sollwert bestimmt wird.

5. Verfahren (100) gemäß einem der Ansprüche 1 bis 4, **dadurch gekennzeichnet, dass** das Sensorsignal (30) in einem Abklingintervall (ΔT₂) und in einem Sendeintervall (ΔT₁) erfasst wird.

6. Verfahren (100) gemäß einem der Ansprüche 1 bis 5, **dadurch gekennzeichnet, dass** das Ergebnis aus Schritt c) validiert wird und eine Erblindung des Abstandssensors (18,19) festgestellt wird, wenn zusätzlich eine Abklingzeit (T₂) bei Variation der Sendepulslänge (T₁) unverändert bleibt.

7. Computerprogrammprodukt zur Durchführung des Verfahrens (100) nach einem der Ansprüche 1 bis 6 wenn das Computerprogramm auf einer programmierbaren Computereinrichtung ausgeführt wird.

8. Abstandssensoreinheit (17) zur Durchführung des Verfahrens (100) gemäß einem der Ansprüche 1 bis 6 mit folgenden Komponenten: i) mindestens einem Abstandssensor (18, 19) zum Aussenden mindestens eines Sendepulses (32): ii) mindestens eine Komponente (16, 28) zum Erfassen (104) eines Sensorsignals in mindestens einem Abklingintervall (AT2); und iii) mindestens eine Komponente (16, 28) zum Bestimmen eines Degradationsgrades basierend auf einem Frequenzverhalten (34) des erfassten Sensorsignals.

9. Fahrassistenzsystem (14) zur Durchführung des Verfahrens (100) gemäß einem der Ansprüche 1 bis 6 mit folgenden Komponenten:
i) mindestens einem Abstandssensor (18, 19) zum Aussenden mindestens eines Sendepulses (32):
ii) mindestens eine Komponente (16, 28) zum Erfassen (104) eines Sensorsignals in mindestens einem Abklingintervall (ΔT₂); und
iii) mindestens eine Komponente (16, 28) zum Bestimmen eines Degradationsgrades basierend auf einem Frequenzverhalten (34) des erfassten Sensorsignals.

## Claims

1. Method (100) for detecting a sensor degradation in distance sensors (18, 19) embodied as ultrasonic sensors, having the following steps:
a) transmitting (102) at least one transmission pulse (32) using a distance sensor (18, 19);
b) detecting (104) a sensor signal (30) of the distance sensor (18, 10) in at least one decay interval (ΔT₂) in which a diaphragm of the distance sensor (18, 19) continues to oscillate, wherein a frequency response (34) of the detected sensor signal (30) comprises at least three intervals (I, II, III), wherein a first and a third interval (I, III) contain at least one extreme (38, 42) and a second interval (II) lies between a last extreme (38) of the first interval (38) and a first extreme (42) of the third interval (III);
c) determining a level of degradation based on a natural frequency of the ultrasonic sensor in the second interval (II) or based on a comparison of the envelope (44) of the frequency response (34) of the sensor signal (30) in one of the three intervals (I, II, III) with a stored characteristic; and
d) varying the transmission pulse length (T₁), wherein the result from step c) is validated and blinding of the distance sensor (18, 19) is ascertained if the frequency response (34) is independent of the transmission pulse length (T₁).

2. Method (100) according to Claim 1, **characterized in that** the sensor signal (30) is detected in each decay interval (ΔT₂) that follows a transmission interval (ΔT₁).

3. Method (100) according to Claim 1 or 2, **characterized in that** the frequency response (34) of the detected sensor signal (30) is determined from intervals (36) of at least one quarter wavelength.

4. Method (100) according to Claims 1 to 3, **characterized in that** a mean value is determined from the frequency response (34) in the second interval (II), and the level of degradation is determined from the mean value and a prescribed setpoint value.

5. Method (100) according to one of Claims 1 to 4, **characterized in that** the sensor signal (30) is detected in a decay interval (ΔT₂) and in a transmission interval (ΔT₁).

6. Method (100) according to one of Claims 1 to 5, **characterized in that** the result from step c) is validated and blinding of the distance sensor (18, 19) is ascertained if additionally a decay time (T₂) remains unaltered when the transmission pulse length (T₁) is varied.

7. Computer program product for performing the method (100) according to one of Claims 1 to 6 when the computer program is executed on a programmable computer device.

8. Distance sensor unit (17) for performing the method (100) according to one of Claims 1 to 6, having the following components: i) at least one distance sensor (18, 19) for transmitting at least one transmission pulse (32); ii) at least one component (16, 28) for detecting (104) a sensor signal in at least one decay interval (AT2); and iii) at least one component (16, 28) for determining a level of degradation based on a frequency response (34) of the detected sensor signal.

9. Driving assistance system (14) for performing the method (100) according to one of Claims 1 to 6, having the following components:
i) at least one distance sensor (18, 19) for transmitting at least one transmission pulse (32);
ii) at least one component (16, 28) for detecting (104) a sensor signal in at least one decay interval (ΔT₂); and
iii) at least one component (16, 28) for determining a level of degradation based on a frequency response (34) of the detected sensor signal.

## Revendications

1. Procédé (100) de détection d'une dégradation de capteurs dans le cas de capteurs de distance (18, 19) réalisés sous la forme de capteurs à ultrasons, comprenant les étapes suivantes :
a) émission (102) d'au moins une impulsion d'émission (32) au moyen d'un capteur de distance (18, 19) ;
b) détection (104) d'un signal de capteur (30) du capteur de distance (18, 10) dans au moins un intervalle de décroissance (ΔT₂) dans lequel résonne une membrane du capteur de distance (18, 19), dans lequel une réponse en fréquence (34) du signal de capteur (30) détecté comprend au moins trois intervalles (I, II, III), dans lequel des premier et troisième intervalles (I, III) contiennent au moins un extremum (38, 42) et un deuxième intervalle (II) se situe entre un dernier extremum (38) du premier intervalle (38) et un premier extremum (42) du troisième intervalle (III) ;
c) détermination d'un degré de dégradation sur la base d'une fréquence propre du capteur à ultrasons dans le deuxième intervalle (II) ou sur la base d'une comparaison des enveloppes (44) de la réponse en fréquence (34) du signal de capteur (30) dans l'un des trois intervalles (I, II, III) avec une courbe de variation enregistrée ; et
d) variation de la durée de l'impulsion d'émission (T₁), dans lequel le résultat de l'étape c) est validé et une occultation du capteur de distance (18, 19) est détectée lorsque la réponse en fréquence (34) est indépendante de la longueur de l'impulsion d'émission (T₁).

2. Procédé (100) selon la revendication 1, **caractérisé en ce que** le signal de capteur (30) est détecté dans chaque intervalle de décroissance (ΔT₂) qui fait suite à un intervalle d'émission (ΔT₁).

3. Procédé (100) selon la revendication 1 ou 2, **caractérisé en ce que** la réponse en fréquence (34) du signal de capteur (30) détecté est déterminée à partir d'intervalles (36) d'au moins un quart de longueur d'onde.

4. Procédé (100) selon les revendications 1 à 3, **caractérisé en ce qu'**une valeur moyenne est déterminée à partir du comportement en fréquence (34) dans le deuxième intervalle (II) et **en ce que** le degré de dégradation est déterminé à partir de la valeur moyenne et d'une valeur de consigne prédéterminée.

5. Procédé (100) selon l'une des revendications 1 à 4, **caractérisé en ce que** le signal du capteur (30) est détecté dans un intervalle de décroissance (ΔT₂) et dans un intervalle d'émission (ΔT₁).

6. Procédé (100) selon l'une des revendications 1 à 5, **caractérisé en ce que** le résultat de l'étape c) est validé et **en ce qu'**une occultation du capteur de distance (18, 19) est en outre détectée si un temps de décroissance (T₂) reste inchangé lors d'une variation de la longueur de l'impulsion d'émission (T₁).

7. Programme d'ordinateur destiné à mettre en oeuvre le procédé (100) selon l'une des revendications 1 à 6 lorsque le programme d'ordinateur est exécuté sur un dispositif informatique programmable.

8. Unité de capteur de distance (17) destinée à mettre en oeuvre le procédé (100) selon l'une des revendications 1 à 6, comportant les composants suivants : i) au moins un capteur de distance (18, 19) destiné à émettre au moins une impulsion d'émission (32) ; ii) au moins un composant (16, 28) destiné à détecter (104) un signal de capteur dans au moins un intervalle de décroissance (AT2) ; et iii) au moins un composant (16, 28) destiné à déterminer un degré de dégradation sur la base d'une réponse en fréquence (34) du signal de capteur détecté.

9. Système d'aide à la conduite (14) destiné à mettre en oeuvre le procédé (100) selon l'une des revendications 1 à 6, comprenant les composants suivants :
i) au moins un capteur de distance (18, 19) destiné à émettre au moins une impulsion d'émission (32) ;
ii) au moins un composant (16, 28) destiné à détecter (104) un signal de capteur dans au moins un intervalle de décroissance (ΔT₂); et
iii) au moins un composant (16, 28) destiné à déterminer un degré de dégradation sur la base d'une réponse en fréquence (34) du signal de capteur détecté.
